(19) Europäisches Patentamt
European Patent Office
Office européen des brevets

(11) **EP 4 603 185 A1**

(12) **EUROPEAN PATENT APPLICATION**

(43) Date of publication:
**20.08.2025 Bulletin 2025/34**

(21) Application number: 24158215.4

(22) Date of filing: **16.02.2024**

(51) International Patent Classification (IPC):
**B01L 3/00** *(2006.01)* **G01N 15/14** *(2024.01)*

(52) Cooperative Patent Classification (CPC):
**B01L 3/502769; B01L 3/502761; G01N 1/40;**
B01L 2200/0652; B01L 2300/0816;
B01L 2300/0864; B01L 2300/0867;
B01L 2400/0439; B01L 2400/0487

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AcouSort AB**
**223 81 Lund (SE)**

(72) Inventor: **NILSSON, Johan**
**237 35 BJÄRRED (SE)**

(74) Representative: **Brann AB**
**P.O. Box 3690**
**Sveavägen 63**
**103 59 Stockholm (SE)**

(54) **METHODS AND SYSTEMS FOR ACOUSTOFLUIDIC OPERATIONS USING DIFFERENT ISOTOPIC RATIO SECOND LIQUID**

(57) 1. A method of performing an acoustofluidic operation, comprising the steps of: i. providing a liquid sample comprising a first liquid, ii. contacting the liquid sample with second liquid which: a. has a different acoustic impedance relative to the first liquid, and b. has a different isotopic ratio of at least one chemical element of the molecules making up the first liquid, iii. positioning the liquid sample and second liquid in a cavity, and iv. performing an acoustofluidic operation by providing at least a part of a, preferably standing, acoustic wave in the cavity. Also disclosed are an acoustofluidic system, a use, and a second liquid.

FIG. 1B

EP 4 603 185 A1

**Description**

Technical field

The technology proposed herein relates generally to the field of acoustofluidics in which ultrasound is used to actuate waves in liquids and suspensions for interacting with the liquids or different types of particles in the liquids and suspensions, for example for performing inter alia separation and sorting of the particles or mixing of liquids or suspensions. The technology proposed herein more particularly relates to methods and systems for performing such acoustofluidic operations on a liquid sample comprising a first liquid using a second liquid, which has a different acoustic impedance relative to the first liquid, and a different isotopic ratio of at least one chemical element of the molecules making up the first liquid.

Background

Acoustofluidics generally refer to using sound to affect liquids or particles in liquids or suspensions. Acoustofluidics used to affect particles is generally termed acoustophoresis. Acoustophoresis has been used inter alia for separating different types of cells in suspensions such as separating blood cells from plasma or for separating and collecting circulating tumor cells from blood. Generally, an acoustofluidic device comprises a microfluidic cavity such as a microfluidic flow channel fashioned in a substrate. The suspension is pumped through the flow channel under laminar flow conditions, or alternatively is stationary in the flow channel. An ultrasound transducer, particularly a piezoelectric element, is attached to the substrate and actuated to produce an ultrasonic vibration in the substrate in the range of about 1-10 Mhz. Provided that the dimensions, in particular height or width of the microfluidic cavity or whole substrate, is properly matched with the frequency of the ultrasonic vibration, a standing wave may appear in the channel. This standing wave exerts a force on the particles in the suspension dependent on the acoustic contrast of each individual particle as determined by the properties of each particle relative to those of the suspending liquid in the suspension, and thus particles will be forced to move, dependent on the acoustic contrast, towards or away from the pressure node(s) of the standing wave.

Applications include, as stated above, separation, sorting, trapping and other manipulations of the particles. More general applications of acoustofluidics involve mixing of liquids. Generally, an acoustofluidic device can be used both for general acoustofluidic operations such as mixing of liquid, as well as for acoustophoretic operations such as manipulating particles.

Often particles in a liquid sample such as a sample of a disperse liquid have positive acoustic contrast, such as higher density and/or lower compressibility, relative to the suspending liquid in the disperse liquid. When subjected to an acoustic standing wave, the particles will then move towards a pressure node of the standing wave. Under laminar flow conditions the particles thus positioned can be collected. If a disperse liquid comprises two types of particles having different properties, then the possibility of separating the first type of the particle from the second depends on the respective particles' acoustic contrast and size. If the types of particles have different sign acoustic contrast, i.e. one is negative and the other is positive, then separation becomes rather straightforward as the two types of particles will move to the nodes and antinodes respectively, and thus be separated from each other allowing collection. If the particles have the same sign acoustic contrast, then both types of particles will move to the same nodes or antinodes, respectively, and are thus not easily separated.

Various techniques have been attempted to solve the latter type of problem. One approach utilizes a time-of-flight principle whereby same sign acoustic contrast particles can be separated based on their migration speed in the acoustic field, and consequently position at time of collection, as they move to the respective node or antinode. Such an approach however requires a more complex structure of the microfluidic cavity, in particular its outlet section. Other approaches involve modifying the properties of one type of particles by mixing the liquid sample with other particles which bind to and thereby increase or decrease the density of the type of particles, so as to obtain a positive-negative acoustic contrast relation between the two types of particles. Adding such an extra step however requires access to suitable particles capable of binding to the particles of interest. Other approaches involve modifying the properties of the suspending liquid, e.g., its density and/or compressibility, to obtain the same relation. This also adds a further step to the procedure.

Objects

A primary object of the technology proposed herein is therefore to provide a method for performing an acoustofluidic operation.

A further object of the technology proposed herein is to provide an acoustofluidic system.

It is another object of the technology proposed herein to provide a use of a second liquid for performing an acoustofluidic operation on a liquid sample comprising a first liquid. Yet a further object of the technology proposed herein concerns providing a second liquid for use in an acoustofluidic operation performed on a liquid sample comprising a first liquid.

Summary

At least one of the abovementioned objects or at least one of the further objects which will become evident from the below description, are according to corresponding first, second, and third aspect of the technology proposed herein achieved by a method of performing an acoustofluidic operation, comprising the steps of:

    i. providing a liquid sample comprising a first liquid,
    ii. contacting the liquid sample with second liquid which:

        a. has a different acoustic impedance relative to the first liquid, and
        b. has a different isotopic ratio of at least one chemical element of the molecules making up the first liquid,

    iii. positioning the liquid sample and second liquid in a cavity, and
    iv. performing an acoustofluidic operation by providing at least a part of a, preferably standing, acoustic wave in the cavity.
    and

    an acoustofluidic system comprising:

        a) an acoustofluidic device comprising a substrate in which a cavity is provided, the cavity comprising:

        -    at least one inlet, and
        -    at least one outlet,

        b) an ultrasound transducer connected to the substrate,
        c) a drive circuit connected to the ultrasound transducer and configured to drive the ultrasound transducer at a frequency generating at least a part of a, preferably standing, acoustic wave in the cavity,
        d) a sample container for holding a liquid sample comprising a first liquid,
        e) a sample pump arranged to pump the liquid sample from the sample container and introduce it into the cavity,
        f) a container holding a second liquid which:

            a. has a different acoustic impedance relative to the first liquid, and
            b. has a different isotopic ratio of at least one chemical element of the molecules making up the first liquid, and

    a use of a second liquid which:

        a. has a different acoustic impedance relative to a first liquid, and
        b. has a different isotopic ratio of at least one chemical element of the molecules making up the first liquid,

    for performing an acoustofluidic operation on a liquid sample comprising the first liquid.

Accordingly, the technology proposed herein is based on an unexpected problem appearing with earlier approaches involving modifying the properties of the first liquid of the liquid sample or by modifying the second liquid. Accordingly, it was found that the inmixing of various small particles or ions to e.g., change the density of the first or second liquid, such as the inmixing of silica particles or the use of solutions of e.g., glucose or cesium chloride, unexpectedly resulted in difficulties when the liquid sample and/or the particles therein was to be further analyzed after the acoustofluidic operation had been performed. Specifically, it was found that particles, compounds, molecules, or ions tended to remain in the liquid sample or the second liquid even after the acoustofluidic operation had been performed and thus caused interference or breakdown in the instruments used to analyze the liquid sample and in particular any particles in the liquid sample or in the second liquid. This emerging problem could thus surprisingly inconvenience the integration of acoustofluidic devices and operations as sample pretreatment devices and methods in common analytical instruments, such as e.g. mass spectrometers and blood gas analyzers.
Having realized this problem, the present inventors identified that a second liquid which has a different acoustic impedance relative to the first liquid, and has a different isotopic ratio of at least one chemical element of the molecules making up the first liquid, could provide the desired modification with minimal disturbance to the liquid sample, in particular with minimal difference to the first liquid, such as no risk of remaining particles, compounds, molecules, or ions that could interfere with later analysis.

Accordingly, as discussed in more detail below and shown in the examples, for a first liquid such as water, a second liquid such as heavy water, which has a different acoustic impedance relative to the first liquid due to inter alia a higher density, and has a different isotopic ratio of at least one chemical element, here hydrogen (H), thus provides for obtaining similar results when the liquid sample is subjected to the acoustofluidic operation as would otherwise require the use of aqueous solutions modified to have a higher density, i.e. by the addition of particles, compounds, molecules, or ions. This allows for integrating acoustofluidic devices and operations as sample pretreatment devices and methods in analytical instruments because the second liquid can have the desired different acoustic impedance without comprising such particles, compounds, molecules, or ions.

Additionally, for some applications it may be desired that the second liquid, as far as possible, has the same or similar properties as the first liquid, such as the same tonicity, osmolality, pH, etc. This may for example apply where the liquid sample comprises cells which are to be transferred from the first liquid to the second liquid during the acoustofluidic operation, while needing to avoid damage to, or negative effects on, the cells due to changes in such parameters. The technology proposed herein is useful also in such cases because the second liquid may be selected to have the same such properties as the first liquid, and the desired difference in acoustic impedance being provided by the different isotopic ratio of the at least one chemical element of the molecules making up the first liquid.

The steps of the method are preferably performed in order, however, step ii may be performed after step iii or concurrent with step ii.

The acoustofluidic operation generally involves affecting the liquid sample, any particles in the liquid sample, and the second liquid, using sound.

The acoustofluidic operation may comprise or consist of one or more of focusing, e.g., causing particles to move to discrete areas of the microfluidic cavity, trapping, e.g., retaining particles in the cavity, and separating, i.e. causing different particles (which particle differ in size and/or acoustic contrast compared to the liquid in the cavity) to move in different directions and/or with different speeds.

The acoustofluidic operation may further comprise or consist of one or more of moving, or preventing the movement of, the liquid sample or the first liquid vis-à-vis the second liquid, causing, or preventing, mixing of the first liquid or the liquid sample with the second liquid, forming a density gradient in the first liquid, the liquid sample and/or the second liquid. Further acoustofluidic operations are described below with reference to the terms acoustic impedance and acoustic contrast factor.

Providing a liquid sample may comprise any of obtaining and preparing a liquid sample.

The liquid sample may be any liquid sample. The liquid sample may comprise particles dispersed in the first liquid. Alternatively, the liquid sample is devoid of particles, in which case the liquid sample may consist of the of the first liquid.

The liquid sample may alternatively be considered a sample of a liquid.

The liquid sample may have a volume of 0.1 nL to 1000 L. Typically, the sample may have a volume of 0.1 mL to 10 L.

The liquid sample is preferably a biological liquid or a liquid comprising biological tissue. The liquid sample may preferably comprise or consist of one or more of a sample of undiluted or diluted blood, undiluted or diluted plasma, undiluted or diluted serum, undiluted or diluted intracellular fluid, undiluted or diluted interstitial fluid, undiluted or diluted synovial fluid, undiluted or diluted peritoneal fluid, undiluted or diluted urine, a solution comprising bone marrow, a solution comprising stroma, undiluted or diluted culture medium optionally containing a bacterial or yeast culture, undiluted or diluted milk, undiluted or diluted suspensions of animal cells, undiluted or diluted suspensions of dissociated cells from normal or cancerous tissue, or undiluted or diluted suspensions of any of red blood cells, white blood cells, platelets, cancer cells, bacterial cells, stem cells, mononuclear cells, viruses, yeast cells, algae, pollen, extracellular vesicles such as microvesicles and exosomes, dust particles, silica particles, magnetic particles, and polymer particles.

Where the liquid sample comprises particles, then the particles may comprise one or more of red blood cells, white blood cells, platelets, cancer cells, bacterial cells, stem cells, mononuclear cells, viruses, yeast cells, algae, pollen, extracellular vesicles such as microvesicles and exosomes, dust particles, silica particles, magnetic particles, and polymer particles.

The first liquid may be any liquid or mixture of liquids. The first liquid may be considered a suspending liquid when the liquid sample comprises particles.

The first liquid may comprise one or more of water ($H_2O$), alcohol, oil, plasma, serum, intracellular fluid, interstitial fluid, synovial fluid, peritoneal fluid, and urine.

Preferably the first liquid comprises an aqueous liquid or mixture of liquids. In other words, the first liquid preferably comprises or consists of water ($H_2O$). This is the typical case when the liquid sample comprises a biological liquid or a liquid comprising biological tissue.

In normal or natural water less than 0.03%, more preferably less than 0.02%, such as 0.15625% or less, of the hydrogen atoms are deuterium (D or $^2H$).

Contacting encompasses providing a liquid contact between the liquid sample and the second liquid, such as by providing an interface between the liquid sample and the second liquid. Such a liquid contact, and/or such an interface, may be provided by placing the liquid sample and the second liquid in contact with each other, e.g. by flowing them under laminar flow conditions side by side, or one inside the other within the cavity. Contacting may also comprise mixing the liquid sample with the second liquid, i.e. mixing the first liquid with the second liquid.

The second liquid has a different acoustic impedance relative to, i.e. different from, the first liquid. The acoustic impedance is defined as the density of the liquid times the speed of sound in the liquid. Accordingly, the density, and/or the speed of sound, are different in the first liquid and the second liquid.

This provides that the liquid sample and the second liquid are affected differently by the acoustic wave, and further that any particles in the liquid sample behaves differently when subjected to the acoustic wave dependent on whether the particle is suspended in the first liquid, suspended in the second liquid, or suspended in a mixture of the first liquid and the second liquid.

Accordingly, a number of useful acoustofluidic effects can be obtained and corresponding acoustofluidic operations can be performed. These effect and operations include:

- Prevention of media switching, i.e., ensuring that the liquid sample and the second liquid do not change place in the cavity when at least the part of the acoustic wave is provided in the cavity. This effect is obtained when the second liquid has a higher acoustic impedance than the liquid sample and the first liquid and any pressure node of the acoustic wave is located within the part of the cavity that is occupied by the second liquid.

- Obtaining of mixing and/or media switching, i.e., where the liquid sample and the second liquid change place or mix in the cavity when at least the part of the acoustic wave is provided in the cavity. This effect is obtained when the second liquid has a lower acoustic impedance than the liquid sample and the first liquid and a pressure node of the acoustic wave is located within the part of the cavity that is occupied by the second liquid.

- Forming a barrier to particle migration, i.e. where a particle in the liquid sample selectively may not enter the second liquid when at least the part of the acoustic wave is provided in the cavity. This effect is obtained when the second liquid has a higher acoustic impedance than the liquid sample and the first liquid and a pressure node of the acoustic wave is located within the part of the cavity that is occupied by the second liquid, and where the acoustic contrast factor of the particle is positive in the first liquid but negative or neutral in the second liquid. Here the acoustic contrast factor $\varphi$ for particle having the compressibility $\beta_p$ and the density $\rho_p$ suspended in a liquid having the compressibility $\beta_m$ and the density $\rho_m$ can be expressed as:

$$\Phi = \frac{5\rho_p - 2\rho_m}{2\rho_p + \rho_m} - \frac{\beta_p}{\beta_m}$$

Accordingly, utilizing this barrier effect provides for allowing one type of particle, having a positive acoustic contrast in the second liquid, to be separated from the liquid sample and enter the second liquid, whereas another type of particle, having a negative or neutral acoustic contrast factor in the second liquid will not be able to enter the second liquid.

- Differentiating migration speed for different particles, i.e. where similar to the barrier effect, the second liquid has an acoustic impedance for which different particles with different acoustic contrast factors travel at different speeds towards the pressure node.

- Adjusting the acoustic impedance of the first liquid by mixing the liquid sample with the second liquid so as to provide different types of particles therein with different sign or size (absolute value) acoustic contrast factors. In this way one type of particle, having a positive acoustic contrast factor in the mixture of first liquid and second liquid may be separated from another type of particle having a neutral or negative acoustic contrast factor in the mixture of first liquid and the second liquid.

The acoustofluidic operation may comprise or be followed by a measurement or optical observation or interrogation in the microfluidic cavity.

The acoustofluidic operation may further be any acoustofluidic or acoustophoretic operation such as mixing of liquids or suspensions, pumping, sonoporation and sonolysis, or affecting cells or particles in a liquid or suspension.

The acoustofluidic operation may comprise or consist of an acoustophoretic operation encompassing manipulating cells or other particles, e.g., comprising focusing cells or other particles, suspended in a suspending liquid within the microfluidic cavity, towards one or more discrete areas of the microfluidic cavity. Focusing is to be understood as encompassing moving.

The second liquid further has a different isotopic ratio of at least one chemical element of the molecules making up the first liquid. Isotopic ratio generally refers to the ratio of the atomic abundances of two isotopes of the same chemical element.

In other words, the second liquid may comprise, or consists of, substantially the same liquid as the first liquid but where, for at least one chemical element of the molecules making up the first liquid, the corresponding molecules in the second liquid comprise another isotope of that chemical element in an amount sufficient to provide a different isotopic ratio or prevalence of that isotope compared to in the first liquid.

The different isotopic ratio thus provides a second liquid that provides the desired difference in acoustic impedance, due to the different isotopic ratio e.g. providing a different molar mass, but without relying on the addition of any particles, compounds, molecules, or ions.

In particular, the different isotopic ratio may comprise an increased abundance of a heavier isotope of a chemical element in relation to a lighter isotope of that chemical element.

As an example illustrating the principle, a liquid sample may comprise particles dispersed in a first liquid in the form of water ($H_2O$). In such natural or normal water, typically 0.015625% of the hydrogen atoms are in the form of the isotope deuterium (D or $^2H$). Thus, the isotopic ratio of deuterium to hydrogen in the first liquid is 0.015625%.

The chemical elements of the molecules making up the first liquid are hydrogen and oxygen. The second liquid thus must have a different isotopic ratio of either hydrogen or oxygen. This may easily be obtained by using heavy water as the second liquid. Heavy water generally refers to water in which the proportion of deuterium, i.e. the isotopic ratio, is greater than usual, i.e. greater than 0.015625%.

Commercially available heavy water may for example have a constitution were 99.75% of the hydrogen atoms are of the heavy type, i.e. an isotopic ratio of 99.75%. Such a heavy water has a density that is 11 % larger than normal water, which thus provides the desired difference in acoustic impedance.

Accordingly, the second liquid may thus comprise or consist of heavy water. Mixtures of normal water and heavy water are especially advantageous as they allow selecting the acoustic impedance of the second liquid precisely by adjusting the amounts of the normal water and heavy water used to form the mixture.

Useable forms of heavy water include deuterium oxide (D2O), semi-heavy water (HDO), heavy-oxygen water ($H_2{}^{17}O$), doubly-labeled water ($D_2{}^{18}O$) and super-heavy water ($T_2O$). These, and any other form of heavy water, may be mixed together or mixed with normal water to reach the desired difference in acoustic impedance compared to the first liquid. Deuterium oxide has a density of about 1.107 kg/L (kg per liter), whereas deuterium hydrogen oxide has a density of about 1.054 kg/L.

Deuterium oxide ($D_2O$) is especially interesting because it has about 11% higher density but 3.5% higher compressibility than water. This ratio, where a higher density is not followed by a lower compressibility, allows $D_2O$, alone or in mixture with normal water or other heavy waters, to be used to reach other acoustic impedance values than can be reached when using other density increasing substances such as Histopaque and Ficoll, which are polysucrose solutions having densities higher than water.

Some further examples are given in table 1 below:

Table 1. Further examples of first and second liquids

| Liquid sample | Molecules making up first liquid | Chemical elements | Example of isotopes to obtain a different isotopic ratio | Possible second liquids |
|---|---|---|---|---|
| Whole blood | Liquid : $H_2O$,<br><br>Dissolved: $Na^+$, $Cl^-$, other ions | H<br>O<br>Cl<br>Na | H: D, T<br>O: $^{17}O$, $^{18}O$<br>Cl: $^{17}Cl$ | i) $D_2O$, HDO, or $T_2O$, and mixtures thereof with water or PBS.<br><br>ii) $H_2{}^{17}O$ or $H_2{}^{18}O$, and mixtures thereof with water or PBS or $D_2O$, HDO, or $T_2O$.<br>iii) an isotonic concentration of $Na^+$ and $^{37}Cl^-$ dissolved in water, $D_2O$, HDO, $T_2O$, $H_2{}^{17}O$, or $H_2{}^{18}O$, or as part of or PBS optionally mixed with one or more of $D_2O$, HDO, $T_2O$, $H_2{}^{17}O$, or $H_2{}^{18}O$. |

(continued)

| Liquid sample | Molecules making up first liquid | Chemical elements | Example of isotopes to obtain a different isotopic ratio | Possible second liquids |
|---|---|---|---|---|
| Plastic beads in distilled water | Liquid: $H_2O$ | H<br>O | H: D, T<br>O: $^{17}O$, $^{18}O$ | i) $D_2O$, HDO, $T_2O$, and mixtures thereof with water.<br><br>ii) O: $H_2^{17}O$, $H_2^{18}O$ and mixtures thereof with water or $D_2O$, HDO, $T_2O$. |
| | | | | Preferably without any additional dissolved ions or particles. |
| Jurkat cells in cell medium (RPMI 1640 + 10% FBS) | Liquid: $H_2O$ | H<br>O | H: D, T<br>O: $^{17}O$, $^{18}O$ | i) $D_2O$, HDO, or $T_2O$ mixed with PBS or fresh cell medium.<br>ii) $H_2^{17}O$, $H_2^{18}O$ mixed with PBS or fresh cell medium. |
| Plastic beads in ethanol | Liquid: $CH_3CH_2OH$ | C<br>H<br>O | C: $^{13}C$, $^{14}C$<br>H: D, T<br>O: $^{17}O$, $^{18}O$ | i) deuterated ethanol, e.g.<br>$CH_3CHDOH$, $CD_3CH_2OH$, $CH_3CD_2OH$, or $CD_3CD_2OD$. |

While it is generally preferred that the chemical element, which isotopic ratio differs between the first and second liquid, is part of the molecules making up the liquid part of the first liquid, it is also possible to vary the isotopic ratio of a chemical element that makes up the first liquid by being dissolved in it. Thus, in the example, the isotopic ratio of chlorine ions ($^{35}Cl$) dissolved in the first liquid is modified in the second liquid by using the heavier chlorine isotope $^{37}Cl$. Similar to e.g. increasing the isotopic ratio of D to H, increasing the isotopic ratio of $^{37}C$ to $^{35}Cl$ provide a second liquid that can have a different acoustic impedance to the first liquid with minimal other differences, and in particular without the addition of any further particles, compounds, molecules, or ions, that are otherwise not found in the first liquid.

Accordingly, the term molecules making up the first liquid encompasses both molecules of a liquid compound, i.e. molecules that form a liquid (e.g. water, alcohols, other liquids), i.e. makes up the liquid part or compound of the first liquid, and molecules that are dissolved or dispersed in the first liquid (e.g. ions, other molecules, and particles).

Depending on the chemical elements making up the first liquid, and the isotopes that are thereby available to design the second liquid, it may thus be selected to vary the isotopic ratio of a chemical element making up the liquid part, or to vary the isotopic ratio of a chemical element making up the molecules that are dissolved or dispersed in the first liquid, or both, to obtain the second liquid.

It is however generally preferred that the isotopic ratio of a chemical element making up the liquid part is varied to obtain the second liquid.

Accordingly, it may be preferred that the molecules making up the first liquid only comprises the molecules that form a liquid (e.g. water, alcohols, other liquids), i.e. makes up the liquid part of the first liquid. This allows the simplest selection of the second liquid and also provides for using a second liquid that is substantially free of molecules, compounds, ions, and particles dissolved or dispersed in the second liquid.

Substantially free here encompasses that the concentration of molecules, compounds, ions, and particles in the second liquid is less that 1%, more preferably less than 0.1 wt%, more preferably less than 0.01 wt%, even more preferably less than 0.001wt%, more preferably less than 0.0001 wt%, most preferably less than 0.00001 wt%.

While most acoustofluidic operations are performed on various types of aqueous samples, i.e. liquid samples where the first liquid is or comprises water, the method, acoustofluidic system and use may also be performed for other types of first liquids.

Thus, as shown in table 1, the first liquid may be an alcohol such as ethanol or methanol, and the second liquid may then comprise or consist of a deuterated version of the alcohol.

Generally, for a first liquid made up of molecules comprising at least one chemical element $^aA$, $^bB$, $^cC$, etc., where a, b, and c are the isotope numbers of the chemical elements A, B, C, etc., then the second liquid may be obtained by using a variant of the first liquid in which at least one of a, b and c has been increased or decreased so as to provide a different isotope, and hence a different isotopic ratio of the chemical element concerned.

In other words, the first liquid and the second liquid may comprise the same type of molecules, but where the isotopic ratio of at least one chemical element of the molecules differ between the first and second liquid.

The second liquid may for example be obtained as the result of one or more of the following:

- adding an isotope to a volume of the first liquid, thereby increasing the isotopic ratio of the added isotope. One example of this is adding heavy water to normal water.
- reducing the content of a certain isotope in a volume of the first liquid. One example of this is reducing the content of a heavy isotope, e.g. by reducing the content of deuterium or heavy water, in a volume of water. This decreases the isotopic ratio of any deuterium initially present in the water. This may be considered producing an isotope depleted liquid.
- reducing the content of a molecule in a volume of the first liquid. One example of this is reducing the content of $H_2O$ in a volume of water. This increases the isotopic ratio of any deuterium initially present in the water. This may be considered producing a liquid that has been enriched for an isotope not found in the molecule whose content is reduced.

Whereas it is often desired that the second liquid has a higher acoustic impedance than the first liquid, it is also possible to have a second liquid having a lower acoustic impedance than the first liquid. This may be obtained by using, in the second liquid, a lighter isotope of at least one chemical element making up the first liquid.

Alternatively, the desired difference in acoustic impedance may be obtained by using, in the first liquid, a heavier isotope of at least one chemical element of the molecules making up the first second. This may for example be obtained by using a liquid having higher acoustic impedance as the first liquid. Alternatively, the liquid sample may be mixed with a liquid having a higher acoustic contrast than the first liquid. An example illustrating this principle is a liquid sample having as the first liquid water. This liquid sample is mixed with heavy water ($D_2O$, HDO) to increase the acoustic impedance of the first liquid, and the liquid sample is then subjected to the acoustofluidic operation.

The second liquid may further be termed an acoustic impedance modifying liquid or a cell-free buffer.

Preferably the density and/or acoustic impedance of the second liquid differs by at least 0.1%, preferably at least 1%, more preferably at least 5%, most preferably at least 20% from the density and/or acoustic impedance of the first liquid.

Preferably the difference, between the first and second liquid, in isotopic ratio for the at least one chemical element is at least 10%, more preferably at least 50%, more preferably at least 100%, most preferably at least 200% of the isotopic ratio of the chemical element concerned in the first liquid.

In other words, if the at least one chemical element has two different isotopes, then a ratio between the content of the respective isotopes is at least 10%, more preferably at least 50%, more preferably at least 100%, most preferably at least 200% smaller or larger in the second liquid compared to the first liquid.

Further, when the isotopic ratio is higher in the second liquid compared to the first liquid, it may be at least 200%, at least 300%, at least 500% or at least 1000% higher. The isotopic ratio in the second liquid may be even higher, such as at least 10000% or at least 100000%.

As an example, the isotopic ratio of deuterium to hydrogen in natural water is typically 0.015625%, i.e. 0.015625% of the hydrogen atoms are in the form of the deuterium. When the first liquid thus is water, the isotopic ratio of deuterium to hydrogen in the second liquid is preferably at least 10%, more preferably at least 50%, more preferably at least 100 higher or lower than 0.015625%. Accordingly, the isotopic ratio of deuterium to hydrogen in the second liquid could be at least 0.0171875%, at least 0.0234375%, or at least 0.03125%.

Alternatively, the isotopic ratio of deuterium to hydrogen in the second liquid could be 0.0140625% or less, 0.0078125% or less, or 0.

Further, when the isotopic ratio is higher in the second liquid compared to the first liquid, it may be at least 200%, at least 300%, at least 500% or at least 1000% higher.

In the case of deuterium and hydrogen, the isotopic ratio of deuterium to hydrogen in the second liquid could be at least 0.046875%, at least 0,0625%, at least 0,09375%, or at least 0.171875%.

The isotopic ratio of the second liquid may be significantly higher, such at least 1%, at least 5%, at least 10%, at least 20%, at least 50%, at least 75%, at least 90%, or at least 95%. As an example, heavy water may have an isotopic ratio of deuterium to hydrogen of at least 99.75%, or even at least 99.95%. When such heavy water alone, or in mixture with normal water, is used as the second liquid the isotopic ratio of deuterium to hydrogen in the second liquid may be significantly higher, such as at least 1%, at least 5%, at least 10%, at least 20%, at least 50%, at least 75%, at least 90%, at least 95%, or at least 99.75%, or even at least 99.95%, depending on the proportions of heavy water and normal water mixed.

Positioning encompasses the terms providing, introducing, injecting, and flowing. The liquid sample and the second liquid may be positioned in the cavity by one or more of pumping, suction, capillary action, and gravity flow. The liquid sample and the second liquid may be flowed through the cavity or may be positioned in the microfluidic cavity and then allowed to remain stationary, i.e., stopped flow.

The liquid sample and the second liquid may be positioned the cavity simultaneously, such as by being positioned simultaneously side by side or one within the other, or by being positioned simultaneously by being mixed in the cavity or by having been mixed prior to positioning in the cavity.

Alternatively, the liquid sample and the second liquid may be positioned the cavity sequentially, i.e., by one of the liquid sample and the second liquid being positioned in the cavity before the other.

The cavity is preferably a microfluidic cavity, such as a microfluidic channel.

Performing an acoustofluidic operation encompasses affecting one or more of the liquid sample, any particles in the liquid sample, the first liquid, and the second liquid, using sound, in particular an acoustic wave or part thereof, more particular a standing acoustic wave, even more particularly an ultrasound acoustic wave such as an ultrasound standing acoustic wave or part thereof. In particular the acoustofluidic operation encompasses affecting any particles in the liquid sample using the sound.

The acoustofluidic operation is performed by providing at least a part of a, preferably standing, acoustic wave in the cavity. Preferably the acoustic wave is an ultrasound acoustic standing wave. For an acoustofluidic operation, it is sufficient that the acoustic wave or part thereof provides at least a gradient of pressure and/or velocity in the cavity.

Preferably, the acoustic wave is a standing acoustic wave whereby at least one pressure node, or at least one antinode is provided within the cavity. The frequency f of the acoustic wave is typically in the range of 0.1 to 20 MHz. The voltage of the signal used to drive an ultrasound transducer providing the acoustic standing wave is preferably 1 - 30 Vpp, such as 10-20 Vpp.

The acoustic wave may occur within the cavity itself or may occur within the whole of the substrate. Thus, the acoustic wave may correspond to

a one- or two-dimensional acoustic wave, preferably a one- or two-dimensional standing acoustic wave, i.e. resonance, in the cavity.

For such resonances, the resonance frequencies are dependent on the dimensions of the cavity because in general, in order for a standing wave to form the dimension of the cavity must correspond to $n\lambda/2$ where n is a positive integer and $\lambda$ is the wavelength of the acoustic standing wave, this wavelength being inversely proportional to the frequency.

As an example, a first resonance for a standing wave directed along the width dimension of a cavity has a resonance frequency f which is associated with an acoustic standing wave $\lambda/2$ corresponding to a first harmonics where the pressure anti nodes of the standing wave are positioned near the walls of the cavity and a single pressure node is formed in the middle of the cavity, thus causing particles with positive acoustic contrast factor to congregate in the center of the cavity whereas particle with negative acoustic contrast factor, as well as the first liquid, are positioned near the side walls of the cavity. The following transversal arrangement is obtained:

- first wall,
- liquid layer and particles with negative acoustic contrast factor,
- particles with positive acoustic contrast factor,
- liquid layer and particles with negative acoustic contrast factor, and
- second wall.

In a second harmonics, corresponding to a resonance frequency that is two times the first resonance frequency, i.e. 2f, a standing wave $\lambda$ is formed having two nodes and three antinodes, thus generally forcing the positive acoustic contrast factor particles to congregate in two bands on both sides of the center of the cavity, whereas the negative acoustic contrast factor particles and the first liquid occupy the position of the antinodes, resulting in:

- first wall
- first liquid layer and particles with negative acoustic contrast factor,
- first layer of particles with positive acoustic contrast factor
- second liquid layer and particles with negative acoustic contrast factor,
- second layer of particles with positive acoustic contrast factor
- third liquid layer and particles with negative acoustic contrast factor, and
- second wall.

In these cases, the whole of the acoustic standing wave is typically present within the cavity. These types of resonances may be called cavity resonances because it is the walls of the cavity that represent the boundaries of the acoustic standing wave.

Typically, however, the acoustic standing wave corresponds to a three-dimensional volume resonance of the whole substrate including the cavity. This means that the acoustic standing wave has the outer walls of the substrate as boundaries for the acoustic standing wave. In these cases, a part of the acoustic standing wave is typically present within the cavity.

A three-dimensional volume resonance of the whole substrate including the cavity may or may not be possible to describe as a one- or two-dimensional resonance or superposition of such resonances. Typically, the acoustic resonance peak corresponds to three-dimensional volume resonance in the substrate including the cavity, which three-dimensional volume resonance cannot be described as a one- or two-dimensional resonance in the substrate. Typically, the resonance frequency of a three-dimensional volume resonance differs from the resonance frequencies possible within the cavity alone. Typically, a resonance in the cavity or the whole substrate including the cavity corresponds to the frequency where the acoustic energy in the substrate reaches a maximum, i.e., it corresponds to a resonance peak or an impedance peak in an impedance spectra of the ultrasound transducer.

There may be several acoustic resonance peaks for a given substrate. The resonance peak should at least correspond to a resonance peak of the substrate in its entirety.

Preferably the resonance peak should correspond to the resonance of the substrate including the cavity including the liquid inside the cavity.

The acoustofluidic system may also be called an acoustofluidic device. The acoustofluidic system is suitable for performing an acoustofluidic operation.

In the context of the technology proposed herein acoustofluidic device is to be understood as encompassing acoustophoretic device, acoustophoresis chip, and acoustophoresis device.

The substrate may be made from a number of different materials including glass, metal, ceramics, and silicon. It is further contemplated within the context of the technology proposed herein that the substrate may be made from polymeric materials, in particular plastics such as cyclic olefin copolymer (COP), cyclic olefin polymers (COC), polycarbonate (PC), polypropylene (PP) poly(methyl methacrylate) (PMMA), polystyrene (PS), and Polyether Ether Ketone (PEEK).

The substrate may have different shapes, lengths, heights, and widths. Preferably the lengths, heights, and widths of the substrate are selected so that there exists a resonance in the substrate at a frequency in the ultrasound range, preferably in the range of 0.1 to 20 MHz, more preferably in the range of 0.8 to 8 MHz, most preferably in the range of 1 to 5 MHz.

Typically, the substrate has a bottom surface, an opposing top surface, two opposing side surfaces, and two opposing end surfaces. The length, height and width of the substrate are typically in the range of 10-100 mm (length) 0.5 to 3 mm (height), and 1-10 mm (width). The substrate may for example be as a capillary.

The cavity is preferably a microfluidic cavity. The cavity may run along at least a part of the substrate and may be provided with inlets and outlets at its opposite ends. The cavity may in particular comprise a channel, in particular a microfluidic channel. The cavity may have a floor, a ceiling, and two opposing side walls. Typically, the cavity will have a rectangular or substantially rectangular cross section, although other shapes of cross section are possible. The width of the cavity is typically from 0.1 to 1 mm and the height 0.05 to 0.5 mm, depending on the size of any particle that is to pass through the cavity. It is to be understood that the liquid sample and the second liquid positioned in the cavity may, or may not, flow through the cavity.

In some embodiments the width of the cavity can be up to 4 mm and the height of the microfluidic cavity can be up to 2 mm.

The cavity may further have different dimensions at different positions along its length. The cavity may further branch into plural cavities, or plural cavities may join into one cavity, at different positions along its length.

The cavity is provided in the substrate.

The substrate may be formed in one piece. Typically, however, the substrate is fashioned from two parts so that the cavity may be easily implemented as a trough or groove in one of the parts whereafter the other part is placed as a lid to seal the trough or groove to form the cavity.

The cavity has at least one inlet. The at least one inlet is suitable for positioning the liquid sample and the second liquid in the microfluidic cavity. More than one inlet may be provided. The liquid sample and the second liquid may be positioned in the cavity through more than one inlet or through different inlets.

The cavity has at least one outlet. The at least one outlet is suitable for allowing the liquid sample and the second liquid to leave the cavity. More than one outlet may be provided. The liquid sample, any particles in the liquid sample and the second liquid may leave the cavity through more than one outlet or though different outlets.

It is further possible that the inlet and the outlet are configured as one or more combined inlets and outlets. In this case the liquid sample and the second liquid may be positioned within the cavity, and the liquid sample, any particles in the liquid sample, and the second liquid, may leave the cavity, through the same one or more combined inlets and outlets.

The ultrasound transducer may be bulk ultrasound transducer providing a bulk acoustic wave, (BAW) or a thin film ultrasound transducer. The ultrasound transducer may further be a surface ultrasound transducer providing a surface acoustic wave, (SAW). The ultrasound transducer preferably comprises a piezoelectric or electrostrictive material. Suitable materials for ultrasound transducers include a crystalline material having a non-centrosymmetric crystal structure such as langasite ($La_3Ga_5SiO_{14}$), gallium orthophosphate ($GaPO_4$) and lithium niobate ($LiNbO_3$), lithium tantalate

(LiTaO$_3$), or a ferroelectric ceramic with randomly oriented grains such as lead titanate (PbTiO$_3$), potassium niobate (KNbO$_3$), sodium tungstate (Na$_2$WO$_3$) lead zirconate titanate (PZT) with the formula (Pb[Zr$_x$Ti$_{1-x}$]O$_3$ with $0 \leq x \leq 1$), as well as lead-free ceramics such as sodium potassium niobate ((K,Na)NbO$_3$), bismuth ferrite (BiFeOs), sodium niobate (NaNbO$_3$), barium titanate (BaTiO$_3$), bismuth titanate (Bi$_4$Ti$_3$O$_{12}$), and sodium bismuth titanate (NaBi(TiO$_3$)$_2$), for example. Further materials include lead magnesium niobate (PMN), lead magnesium niobate-lead titanate (PMN-PT), and lead lanthanum zirconate titanate (PLZT). Other possible materials include molybdenum disulfide which exhibits piezoelectricity also in monolayer form.

The ultrasound transducer may for example comprise a piezoelectric or electrostrictive material selected from the group consisting of zinc oxide, aluminum nitride, scandium-doped aluminum nitride, cerium oxides, and lead-zirconate-titanate.

Typically, the ultrasound transducer comprises a piezoelectric or electrostrictive material which is caused to vibrate by an electric drive signal. However, it is further contemplated within the context of the technology proposed herein that also other types of ultrasound transducer materials, such as magnetostrictive materials (which change dimension in magnetic fields) and thermoacoustic materials (which emit acoustic vibrations in response to temperature changes) can be used. It is further contemplated within the context of the technology proposed herein that the ultrasound transducer could employ an electrostatic function, whereby vibrations are caused by varying the electrostatic attraction and/or repulsion between electrodes of the ultrasound transducer.

More than one ultrasound transducer may be used. If two ultrasound transducers are used, then they may be driven in phase or out of phase with each other.

In phase means that the two ultrasound transducers are actuated in concert, i.e., so as to be actuated without any phase shift between the two signals to the two ultrasound transducers. Out of phase is to be understood as any phase shift between the two signals to the two ultrasound transducers. Preferably however the phase shift is 90° to 270°, such as preferably 135° to 225°, such as preferably 170° to 190°, most preferably 180° (antiphase) to more efficiently cause the whole substrate to vibrate.

The ultrasound transducer may be a thin film ultrasound transducer. In the context of the technology proposed herein the thickness of the thin film ultrasound transducer is the thickness of the material layer that provides the ultrasound vibrations. As an example, where the thin film ultrasound transducer comprises a layer of piezoelectric or electrostrictive material, the thickness of any electrode layer or layers used to deliver an electric signal to the layer of piezoelectric or electrostrictive material are not included in the thickness of the thin film ultrasound transducer.

Typically, the cavity has at least one minimum dimension, such as a width or height, and the thickness of the thin film ultrasound transducer is smaller than the at least one minimum dimension. Preferably the substrate has a minimum dimension, such as a width or height, and the thickness of the thin film is less than 1/10 or more preferably less than 1/100 of the minimum dimension. The thin film ultrasound transducer typically makes up less than 0.001 of the total volume of the acoustofluidic device.

The thin film ultrasound transducer may comprise a layer of piezoelectric or electrostrictive material to which a first and second electrodes have been connected in order to supply electric energy to the piezoelectric material to cause it to vibrate. Preferably the thickness of the thin film ultrasound transducer is less than 100 $\mu$m preferably less than 10 $\mu$m, more preferably 5 $\mu$m or less, such as 0.01 to 5 $\mu$m, more preferably 3 $\mu$m or less, such as 0.5 to 3 $\mu$m, more preferably 2 $\mu$m or less, such as 0.5 to 2 $\mu$m, such as 0.5 to 1.5 $\mu$m, such as 1 $\mu$m or less than 1 $\mu$m. These thicknesses are typically less than ¼ of the wavelength, in the thin film ultrasound transducer material, for the acoustofluidic device resonance frequency used when actuating the acoustofluidic device to perform an acoustofluidic operation. These are typical thicknesses for thin films. However, the thin film ultrasound transducer may be significantly thinner, such as down to one or more atomic or molecular monolayers. Generally, a thinner thin film ultrasound transducer may be easier to manufacture, whereas a thicker thin film ultrasound transducer may provide a stronger acoustofluidic effect in the microfluidic cavity.

The ultrasound transducer is connected to the substrate. This encompasses that the ultrasound transducer is in in acoustic contact with the substrate by being in direct physical contact, or by being in indirect physical contact via for example an acoustically conducting material.

Preferably the ultrasound transducer is provided in acoustic contact with a majority, such as all, of one surface of the substrate, Alternatively the ultrasound transducer is provided in acoustic contact with a part of the one surface. It may be preferably to provide the ultrasound transducer so that at least a portion of the cavity can be observed through a surface of the substrate.

The drive circuit may comprise a function generator electrically connected to the ultrasound transducer.

Connected to the ultrasound transducer means that the drive circuit is connected in such a way as to be able to drive the ultrasound transducer. Typically, the drive circuit is connected electrically to the ultrasound transducer so as to drive the ultrasound transducer using an electrical drive signal.

The drive circuit is configured to drive the ultrasound transducer at a frequency generating at least a part of a, preferably standing, acoustic wave in the microfluidic cavity.

As noted above, the acoustic wave may be confined to the cavity, or may be an acoustic wave present in the whole of the substrate. In either case at least a part of the acoustic wave is present in the cavity. Preferably at least one pressure node or at least one antinode is present in the cavity.

The acoustofluidic system may contain further components such as a detector for making measurements in the microfluidic cavity.

The sample container may be any container suitable for holding the liquid sample, but is preferably a test tube or other closed or closable container.

The sample pump may be any type of pump, such as a syringe pump or a peristaltic pump. The sample pump is arranged to pump the liquid sample from the sample container and introduce it into the cavity by comprising, or being connected to, pipes or tubing fluidly connecting the sample pump to the sample container and to the cavity.

The container holding the second liquid may be any container suitable for holding the second liquid, but is preferably a test tube or other closed or closable container.

The use of the second liquid for performing an acoustofluidic operation on a liquid sample comprising the first liquid encompasses that the second liquid is used so as to influence or contribute to the result of the acoustofluidic operation.

Generally, the chemical elements in the second liquid whose isotopic ratio differs from the first liquid may be removed after the acoustofluidic operation from any particles separated from the first liquid due to the generally fast diffusion rate of such elements and molecules formed from them. Heavy water, if for example used in a mixture with normal water as the second liquid, may be removed from the normal water by diffusion, i.e. by allowing the heavy water to diffuse from the second liquid into a volume of pure water through a filter, thus allowing the particles to remain in the second liquid which gradually then will contain more and more of normal water as a result of the diffusion process.

Preferably the second liquid is configured to have a density and/or acoustic impedance that is higher than the first liquid, preferably wherein the second liquid is configured to have a density and/or acoustic impedance at least 0.1 %, preferably at least 1%, more preferably at least 5% higher than the first liquid.

This is advantageous in that most particles in liquid samples have higher densities than the first liquid, i.e. they generally have positive acoustic contrast, and providing such a second liquid with a sufficient high acoustic contrast may provide that different types of particles have different sign acoustic contrast in the second liquid, thus allowing the different types of particles to be separated from each other.

Preferably:

- the second liquid comprises or consists of a liquid compound and the at least one chemical element having the different isotopic ratio is a chemical element of, or making up, the liquid compound, or
- the second liquid comprises or consists of a liquid compound in which a further compound is dissolved or dispersed, and the at least one chemical element having the different isotopic ratio is a chemical element of, or making up, the further compound.

As described earlier the required difference in isotopic ratio may be obtained by varying the isotopic ratio of a chemical element making up a liquid part or compound of the second liquid, and/or by varying the isotopic ratio of a chemical element making up a molecule or compound dispersed or dissolved in the second liquid.

Preferably:

- the second liquid comprises or consists of:

  - - one or more of heavy water ($D_2O$), semi-heavy water (HDO), heavy-oxygen water ($H_2^{17}O$ or $H_2^{18}O$), and tritiated water ($T_2O$), or
  - - a mixture of one or more of heavy water ($D_2O$), semi-heavy water (HDO), heavy-oxygen water ($H_2^{17}O$ or $H_2^{18}O$), and tritiated water ($T_2O$), with water ($H_2O$),

  and more preferably:

- the first liquid is water ($H_2O$), and
- the second liquid comprises or consists of:

  - - one or both of heavy water ($D_2O$) and semi-heavy water (HDO), or,
  - - a mixture of one or both of heavy water ($D_2O$) and semi-heavy water (HDO) with water ($H_2O$),

  and more than 0.015625%, preferably more than 0.02%, more preferably at least 0.03%, most preferably at least 0.1% of the hydrogen atoms in the second liquid are deuterium (D or $^2H$).

These second liquids are especially advantageous in that they are readily useable for acoustic operations performed on most aqueous samples, such as biological samples. Further, the use of heavy water and especially mixtures of heavy water and/or semi-heavy water with water provides a wide range of acoustic impedances.

As stated, it is preferred that more than 0.015625%, preferably more than 0.02%, more preferably at least 0.1% of the hydrogen atoms in the second liquid are deuterium (D or $^2$H). This differentiates the second liquid from the first liquid when the first liquid is normal water which typically has an isotopic ratio of D vs H of 0.015625%.

Preferably the liquid sample comprises particles dispersed in the first liquid, the particles comprising at least a first type of particle.

In other words, the liquid sample preferable is a sample of a disperse liquid.

The first type of particle may be considered a target particle. The first type of particle may be considered a type of particle that is to be separated from the liquid sample and from the first liquid.

Preferably the acoustofluidic operation comprises separating the first type of particles from the first liquid.

This is a typical acoustofluidic operation. This operation may be performed either by mixing the liquid sample with the second liquid so as to obtain a mixture in which the first type of particles have a positive acoustic contrast, or by flowing the liquid sample side by side with the second liquid where the second liquid has a higher acoustic impedance than the first liquid, and where the first type of particles have a positive acoustic contrast factor in the first liquid and the second liquid.

Preferably the liquid sample further comprises a second type of particle, and the acoustofluidic operation comprises separating the first type of particle from the second type of particle.

This is also a typical acoustofluidic operation. By selecting the acoustic impedance of the second liquid relative to the first liquid, it may generally be obtained that the first and second type of particle move at different speeds, and possibly also in different directions, during the acoustofluidic operation.

Preferably the second liquid has an acoustic impedance configured so that:

- the first type of particle and the second type of particle have different absolute value of acoustic contrast in the second liquid,
- the first type of particle and the second type of particle have different sign acoustic contrast in the second liquid,
- one of the first type of particles and the second type of particles has a higher absolute value of acoustic contrast in the second liquid compared to in the first liquid, and/or
- one of the first type of particles and the second type of particles has a different sign acoustic contrast in the second liquid compared to in the first liquid.

Configuring the second liquid in this way provides for allowing separation of the first and second types of particles.

When the first type of particle and the second type of particle have different absolute value of their acoustic contrast in second liquid, they will move at different speeds in the second liquid and may thus be separated by a time-of-flight method, i.e. based on their different positions after being subjected to the acoustic wave for a certain time. As an example, one of the first and second type of particle may have a low speed (due to a low absolute value of their acoustic contrast) in the second liquid while the other has a high speed (due to a high absolute value of their acoustic contrast) so that the first and second types of particles exit the cavity through different outlets positioned at different distances along the direction the first and second types of particles are moving due to the acoustic wave.

When the first type of particle and the second type of particle have different sign acoustic contrast in the second liquid, then one of the particles will not be able to enter a region of the cavity in which the second liquid is present.

As an example, both types of particles may have positive sign acoustic contrast in the first liquid. Thus, both types of particles will move towards a pressure node in the acoustic wave. If the pressure node is provided in a region of the cavity, which region is filled with the second liquid, then one of the types of particles will not be able to enter this region as its acoustic contrast sign will reverse at the interface between the first liquid and the second liquid. Thus, only one of the types of particles will reach the region in which the second liquid is present, and this type of particles may in this way be separated from the other type of particles.

When one of the first type of particles and the second type of particles has a higher absolute value of acoustic contrast in the second liquid compared to in the first liquid, then this type of particles will move faster and faster when more and more of the second liquid is mixed into the liquid sample. This may be used to augment the movement speed of this type of particle to improve the separation of this type of particle from the other type, e.g. in a time-of-flight method.

When one of the first type of particles and the second type of particles has a different sign acoustic contrast in the second liquid compared to in the first liquid, then this type of particles will eventually reverse it acoustic contrast sign when more and more of the second liquid is mixed into the liquid sample, and eventually thus lead to a situation where the first and second types of particles have different sign acoustic contrast, which will allow easy separation as the two types of particles will move towards pressure node and antinode, respectively of the acoustic wave.

Step (ii) of contacting the liquid sample with the second liquid, and step (iii) of positioning the liquid sample and the second liquid in the cavity, may comprise mixing the liquid sample with the second liquid prior to the mixture of the liquid sample and the second liquid being positioned in the microfluidic cavity.

This is advantageous in that it can be used to change the acoustic impedance of the first liquid, thus affecting the acoustic contrast factor of the first type and/or second type of particle so as to change how the first type of particles is affected by the acoustic wave or part thereof.

Alternatively, step (ii) of contacting the liquid sample with the second liquid, and step (iii) of positioning the liquid sample and the second liquid in the cavity, comprises introducing the liquid sample and the second liquid into the cavity through separate inlets comprised by the cavity.

This is advantageous in that it provides for using the second liquid as one or more of a barrier liquid preventing the ingress of particles having a negative or neutral acoustic contrast factor in the second liquid, and/or as a carrier liquid for admitting and carrying the particles that have a positive acoustic contrast factor in the liquid. Further the second liquid may act to slow the movement speed of one of the types of particles by providing a lower absolute value of acoustic contrast for this type of particles.

Further, by introducing the liquid sample and the second liquid into the cavity through separate inlets comprised by the cavity, there is no need for a separate step of mixing the liquid sample with the second liquid.

Thus, the separate inlets may comprise at least a center inlet and at least a side inlet, wherein the cavity comprises a channel extending from the separate inlets to at least one outlet, and step (iii) of introducing the liquid sample and the second liquid is performed such that the liquid sample and the second liquid flow laminarly, side-by side or one inside the other, through the channel.

This is advantageous in that it provides a very high separation efficiency, see example 1 and 2, and may also provide a simultaneous washing of the first type of particles.

In the system according to the second aspect of the technology proposed herein, preferably:

- the cavity is a channel having the at least one inlet and the at least one outlet, and
- the at least one inlet comprises a separate center inlet and a separate side inlet,

and the system may further comprise:

a) a pump arranged to pump the second liquid from the container and introduce it into the cavity, and:

- the sample pump is arranged to pump the liquid sample from the sample container to the side inlet and the pump is arranged to pump the second liquid from the container to the center inlet, or

- the sample pump is arranged to pump the liquid sample from the sample container to the center inlet and the pump is arranged to pump the second liquid from the container to the side inlet.

The at least one inlet and the at least one outlet may comprise two or more inlets and two or more outlets.

The center inlet and the side inlet may be implemented as a joining of two channels. Likewise, two or more outlets may be implemented as a bifurcation or trifurcation of a channel.

The pump may be arranged to pump the second liquid from the container and introduce it into the cavity by comprising, or being connected to, pipes or tubing fluidly connecting the pump to the container and to the cavity.

When the sample pump is arranged to pump the liquid sample from the sample container to the side inlet and the pump is arranged to pump the second liquid from the container to the center inlet, then the second liquid preferably has a higher acoustic impedance than the first liquid and at least one pressure node of an acoustic standing wave is provided in the part of the cavity occupied by the second liquid. This setup is useful to separate particles, having a positive acoustic contrast factor in the first liquid and the second liquid, from the liquid sample.

When the sample pump is arranged to pump the liquid sample from the sample container to the center inlet and the pump is arranged to pump the second liquid from the container to the side inlet, then the second liquid preferably has a lower acoustic impedance than the first liquid and at least one anti-node of an acoustic standing wave is provided in the part of the cavity occupied by the second liquid. This setup is useful to separate particles, having a negative acoustic contrast factor in the first liquid and the second liquid, from the liquid sample.

In the use according to the third aspect of the technology proposed herein,

i. the second liquid may be used by mixing it with the liquid sample, or,
ii. the second liquid may be used by flowing it laminarly side-by-side, around, or within, a flow of the liquid sample.

A fourth aspect of the technology proposed herein pertains to a second liquid for use in an acoustofluidic operation performed on a liquid sample comprising a first liquid, the second liquid comprising:

- one or more of heavy water ($D_2O$) and semi-heavy water (HDO), more preferably heavy water ($D_2O$) or a mixture of heavy water ($D_2O$) and water ($H_2O$), wherein more than 0.02% preferably more than 0.03%, more preferably at least 0.1% of the hydrogen atoms in the second liquid are deuterium (D or $^2H$), and
- a buffer system such as a phosphate or carbonate buffer system,

the second liquid preferably further comprising one or more of:

- sodium ions, and
- a surfactant

Such a liquid is useful as it provides the possibility of affecting the result of an acoustofluidic operation without unnecessarily introducing compounds, molecules, ions, or particles to the liquid sample operated on in the acoustofluidic operation.

The buffer system is preferably configured to provide a pH of 4-12, more preferably 6-10, such as 6.5-8 or 6.5-7.5, such as 7. The buffer system provides a controlled pH so as to not detrimentally affect the liquid sample.

The sodium ions are preferably included in a concentration of 2-20, such as 2-10, more preferably 8-10 such as 9 g/L of the liquid. These ranges correspond successively to the content of sodium in body fluids and may be used when it is desired that the second liquid should provide the same or similar osmolality and/or tonicity as the first liquid.

Including a surfactant in the liquid is advantageous in that it may reduce the risk of the liquid or its content of the first or second type of particle from clogging the microfluidic cavity or any pipe or tubing or pump required when using the liquid in an acoustofluidic operation.

Water is advantageous to include in order to obtain a suitable acoustic impedance.

The second liquid preferably has a density of 1 to 1.107 kg/L, preferably 1.05 to 1.107 kg/L. These ranges of densities are useful for performing acoustofluidic operations on a wide range of liquid samples.

Such densities may be achieved by selecting a suitable type of heavy water from the list consisting of heavy water ($D_2O$), semi-heavy water (HDO), heavy-oxygen water ($H_2{}^{17}O$ or $H_2{}^{18}O$), and tritiated water ($T_2O$), and by mixing the heavy water with a suitable amount of water ($H_2O$).

The second liquid preferably comprises at least 0.1 wt% deuterium, this means that at least 0.1 wt% of the second liquid is made up of deuterium (D or $^2H$). Preferably at least 0.5, such as at least 1 wt%, for example at least 5 wt%, more preferably at least 10 wt% of the second liquid is made up of deuterium. Alternatively, the second liquid comprises at least 200 ppm, more preferably at least 1000 ppm, most preferably at least 10000 ppm of deuterium ($D_2O$).

Further advantages with and features of the technology proposed herein will be apparent from the other dependent claims as well as from the following detailed description of preferred embodiments.

Brief description of the drawings and detailed description

A more complete understanding of the abovementioned and other features and advantages of the technology will be apparent from the following detailed description of preferred embodiments in conjunction with the appended drawings, wherein:

Figs. 1A-1D    show the general principles of performing an acoustofluidic operation with a liquid sample and a second liquid.

Fig. 2    shows a schematic view of an acoustofluidic device and system to be used for performing an acoustofluidic operation with a liquid sample and a second liquid.

Fig. 3    shows a flowsheet of the method of performing an acoustofluidic operation.

EXAMPLE 1 - The general principle an acoustofluidic operation.

Example 1 shows that general principles of performing an acoustofluidic operation with a liquid sample and a second liquid according to the technology proposed herein.

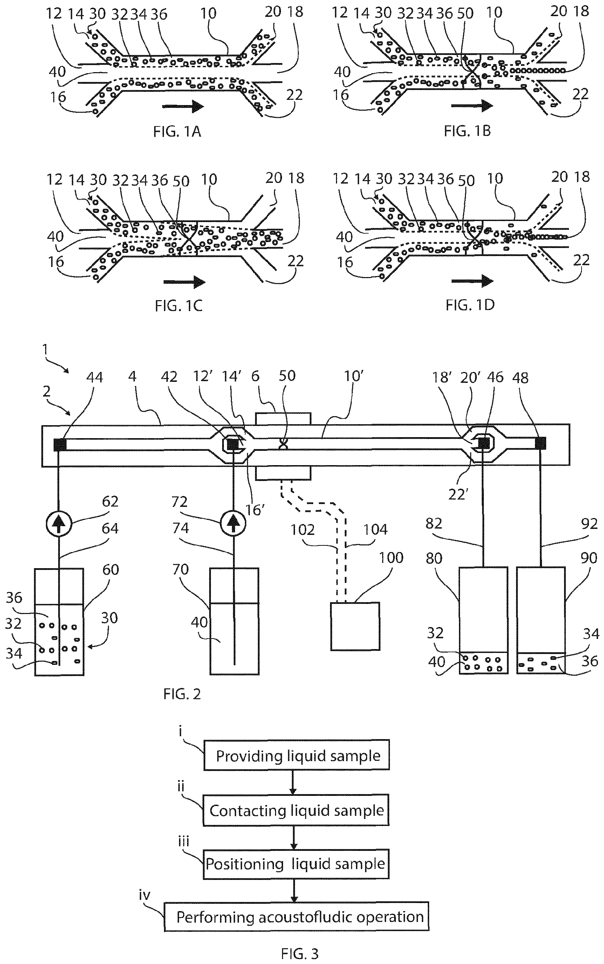

Accordingly, Fig. 1A-1D show the general principle of acoustic separation which is one type of acoustofluidic operation. As seen in Fig. 1A, a separation channel 10 is schematically shown having a center inlet 12, two side inlets 14 and 16, respectively, a center outlet 18, and two side outlets 20 and 22, respectively. A liquid sample, in this case a blood sample 30 comprising blood cells 32 and bacteria 34 (first and second types of particles) suspended in plasma 36 (first liquid) is positioned in the separation channel 10 by being pumped into the separation channel 10 via the side inlets 14, 16. A second liquid, in this case a cell free buffer 40, is positioned in the separation channel 10 by being pumped into the separation channel 10 via the center inlet 12. The pumping of the blood sample 30 and the cell free buffer 40 is configured so that the blood sample 30 and the cell free buffer 40 flow laminarly and thus are laminated along each other and along the separation channel 10. In Figs. 1A-1D the solid arrow beneath the separation channel 10 shows the direction of flow.

In Fig. 1A no acoustic standing wave is provided in the separation channel 10. Accordingly, due to the laminar flow of the blood sample 30 and the cell free buffer 40 the blood cells 32 and bacteria 34 remain suspended in the plasma 36 in the blood sample 3 and no separation occurs with the sample exiting the separation channel 10 through the side outlets 20 and 22 and the cell free buffer exiting the separation channel through the center outlet 18. The hatched line shows the interface between the plasma 36 and the cell free buffer 40, and it can be seen that all of the plasma 36 exit through the side outlets 20, 22.

In Fig. 1B the acoustic standing wave is provided in the separation channel 10 as indicated by the standing wave 50. The blood cells 32 having a positive acoustic contrast factor in the plasma 36 move towards the pressure node in the center of the separation channel 10. Provided that the cell free buffer 40 has an acoustic impedance that is larger than the plasma 36, the cell free buffer 40 will remain in the center of the separation channel 10. Further, provided that the blood cells 32 have a positive acoustic contrast in the cell free buffer 40, the blood cells 32 will enter the cell free buffer 40 to eventually come to rest at the pressure node in the center of the standing wave 50 and in the center of the separation channel 10 and within the cell free buffer 40. The blood cells 32 then exit the separation channel 10 together with the buffer 40 through the center outlet 18. As seen by the hatched lines showing the interface between the plasma 36 and the cell free buffer 40, the plasma 36 and the cell free buffer 40 do not mix.

The bacteria 34 having the same or lower acoustic contrast factor in the plasma 36 remain in the plasma 36 or move towards the anti-nodes at the walls of the separation channel 10. If the bacteria 34 should have an acoustic contrast factor that is positive in the plasma 36, then the bacteria 34 would also move towards the center of the separation channel 10. In this case it has been found that the use of a cell free buffer in which the acoustic contrast factor of the bacteria 34 is negative or neutral, will prevent the bacteria 34 from entering the cell free buffer 40. Instead, the bacteria 34 will move to the interface between the plasma 36 and the cell free buffer 40, but no further, and the blood cells 32 can then still be separated from the plasma 36 and the bacteria 34.

Additionally, as the force on the blood cells 32 and bacteria 34 is proportional to the square of the radius of the respective cell, the larger blood cells 32 will generally move faster, i.e. be affected to a higher degree, by the acoustic standing wave 50. Accordingly, even if the bacteria 34 would move towards the center of the separation channel 10, they typically will not move fast enough towards the center of the separation channel 10 so as to exit the separation channel 10 through the center outlet 18.

The principle shown in Fig. 1B thus, by tailoring the acoustic impedance of the cell free buffer 40, i.e. the second liquid, provides for separating one or more types of particles, e.g. the blood cells 32, from the suspending liquid, i.e. plasma 36, of a liquid sample, i.e. blood 30, in a microfluidic cavity, i.e. separation channel 10.

The need for being able to adjust the acoustic impedance of the cell free buffer 40 is further illustrated by Fig. 1C which shows the result of using a cell free buffer 40 having a lower acoustic impedance than that of the blood sample 30 and the plasma 36. In this case the blood sample 30 with the blood cells 32, bacteria 34 and plasma 36 will move towards the pressure node at the center of the separation channel 10, whereas the cell free buffer 40 will move towards the antinodes along walls of the separation channel 10. Thus, as shown by the hatched lines, the plasma 36 and the cell free buffer 40 will eventually switch places within the separation channel 10. While this may be used to change the place of the blood sample 30 and the cell free buffer 40, this does not immediately result in any useful separation of the blood cells 32 from the blood 30. The problem is solved by increasing the acoustic impedance of the cell free buffer 40 until it is at least as large as, and preferably larger than, that of the plasma 36 and the blood 30.

A further difficulty that may arise is shown in Fig. 1D. Here the bacteria 34 are not directly influenced by the acoustic standing wave 50, rather, the bacteria 34 are entrained through hydrodynamic drag as the blood cells 32 move towards the center of the separation channel 10. Accordingly, some or all of the bacteria end up in the cell free buffer 40 to thereby leave the separation channel 10 through the center outlet 18. This effect increases when the concentration of the blood cells 32 increase. Using a cell free buffer 40 with a high acoustic impedance further mitigates this problem.

Generally, in order to adjust the acoustic impedance, in particular the density, of the cell free buffer 40, various additives may be used. Thus, as one example, the cell free buffer 40 may comprise heavy ions. One example is to fashion the cell free buffer 40 as a solution of CsCl in an aqueous buffer or water. Other salts, as well as solutions of sugars, may also be used. In some cases, silica particles may be used to adjust the density of the cell free buffer.

The following example will show the advantageous approach to obtaining a cell free buffer 40 with desired acoustic impedance but with a lessened or removed risk of constituents of the cell free buffer 40 influencing later analysis of the blood cells 32.

EXAMPLE 2 - Using a second liquid having has a different acoustic impedance relative to the first liquid, and a different isotopic ratio of at least one chemical element of the molecules making up the first liquid, in an acoustofluidic operation by laminarly laminating the second liquid with the liquid sample

Two experiments were performed according to the principle shown in Fig. 1B and Fig. 1C. The experiment was carried out using an acoustofluidic device 2 as shown in Fig. 2. The acoustofluidic device 2 is part of an acoustofluidic system 1 and comprises a substrate 4 to which an ultrasound transducer 6 is attached. A separation channel 10' has a center inlet 12' and side inlets 14' and 16' as well as a center outlet 18' and side outlets 20' and 22'. Center inlet 12' is in fluid communication with a center inlet port 42, the side inlets 14' and 16' are in fluid communication with a side inlet port 44, the center outlet 18' is in fluid communication with a center outlet port 46, and the side outlets 20' and 22' are in fluid communication with a side outlet port 48. The center inlet port 42, side inlet port 44, center outlet port 46, and side outlet port 48 provide for connecting tubing to the substrate so as to position the liquid as well as the second liquid in the separation channel 10. Acoustofluidic system 1 further comprises a sample container 60, a sample pump 62, and tubing 64 connecting the sample container 60 with the side inlet port 44 via the sample pump 62. Accordingly, the liquid sample 14 is pumped by the sample pump 62 into the inlet port 44 and therefrom into the center inlet 12'.

Acoustofluidic system 1 further comprises container 70, a pump 72 and tubing 74 for pumping the cell free buffer 40 (i.e. second liquid) from the container 70 to the center inlet port 42.

The acoustofluidic system 1 further comprises a first container 80 and tubing 82 for receiving the cell free buffer 40 with the blood cells 32 from the center outlet port 46, and a second container 90 and tubing 92 for receiving the plasma 36 with the bacteria 34. Additionally, the acoustofluidic system also comprises a drive circuit 100 that provides a drive signal to the ultrasound transducer 6 via leads 102 and 104. The ultrasound transducer in turn provides the acoustic standing wave 50 in the separation channel 10' that causes the separation of the blood cells 32 (not shown in the separation channel 10') from the plasma 36 (not shown in the separation channel 10') and the bacteria 34 (not shown in the separation channel 10').

In order to evaluate the use of a second liquid having a different acoustic impedance relative to the first liquid, and a different isotopic ratio of at least one chemical element of the molecules making up the first liquid, deuterium oxide ($D_2O$) was added to the cell free buffer 40 and the following two experiments were performed using the parameters in the table below:

| Experiment 1: Separation of Jurkat cells from cell medium to PBS buffer according to the general principle of Fig. 1B. | | | | | |
|---|---|---|---|---|---|
| **Cell free buffer (center inlet)** | **Sample (side inlets)** | **Frequency of ultrasound** | **Voltage amplitude of ultrasound drive signal** | **Separation result: % of Jurkat cells found in center outlet:** | |
| PBS buffer | Jurkat cells in cell medium | 2MHz $\pm$ 2% | 20 $V_{pp}$ | 74,9% | |
| 90 v% PBS buffer + 10 v% $D_2O$ | Jurkat cells in cell medium | 2MHz $\pm$ 2% | 20 $V_{pp}$ | 99,9% | |
| Experiment 2: Prevention of media switching according to the general principle of Fig. 1C. | | | | | |
| **Cell free buffer (center inlet)** | **Sample (side inlets)** | **Frequency of ultrasound** | **Voltage amplitude of ultrasound drive signal** | **Separation result: fluorescence units detected** | |
| Cell wash liquid | Cell wash liquid with fluorescein | 2MHz $\pm$ 2% | 20 $V_{pp}$ | Side inlets: 36258 | Center outlet: 36280 Side outlets: 30142 |
| 90 v% cell wash liquid + 10 v% $D_2O$ | Cell wash liquid with fluorescein | 2MHz $\pm$ 2% | 20 $V_{pp}$ | Side inlets: 36119 | Center outlet: 222 Side outlets: 35652 |

Experiment 1 shows that the cell free buffer, i.e. the second liquid, could be made to have a higher acoustic impedance by the addition of 10 v% heavy water ($D_2O$). The increased acoustic impedance improved the separation result, and it was obtained without the addition of any further particles or heavy ions. More particularly, the second liquid had a different, in this case higher, isotopic ratio of deuterium to hydrogen than the sample liquid.

In contrast to using salts, sugars, or other particles or compounds to increase the acoustic impedance of the PBS buffer and cell wash liquid, respectively, the deuterium oxide provides the required increased acoustic impedance, compared to the first liquid of the liquid sample, with a minimum risk of interfering with later analysis.

Experiment 2 further shows that the second liquid could be used to prevent media switching.

EXAMPLE 3 - Using a second liquid having has a different acoustic impedance relative to the first liquid, and a different isotopic ratio of at least one chemical element of the molecules making up the first liquid, in an acoustofluidic operation by mixing the liquid with a sample

Two experiments were performed using the acoustofluidic device 2 as shown in Fig. 2.

In experiment 1 deuterium oxide ($D_2O$, second liquid) was added to a liquid sample of whole blood (100 mL) having a hematocrit of 40% and an approximate blood plasma relative density of 1.027 kg/L. Accordingly, 60% (60 mL) of the volume of blood was plasma. The whole blood contained erythrocytes (relative density of 1.09645 kg/L) and leukocytes (relative density 1.07-1.08 kg/L). As both erythrocytes and leukocytes have higher relative densities than the plasma in which they are suspended, both types of cells have positive acoustic contrast and will typically move towards the pressure node in the center of the separation channel 10' when the acoustic standing wave is provided in the separation channel 10'.

In order to nevertheless separate the erythrocytes from the leukocytes, deuterium oxide was added to the blood sample for the purpose of increasing the density of the plasma to the relative density value of 1.085 kg/L which was below the relative density of the erythrocytes (1.09645 kg/L) but above the relative density of the leukocytes (1.07 kg/L - 1.08 kg/L). The added amount of deuterium oxide (density 1.107 kg/L) was ((1.085kg/L*0.06 L)-(0.06 L*1.027 kg/L))/(1.107 kg/L-1.085 kg/L) = 0.1582 L, i.e. 158 mL. For the separation of the erythrocytes from the whole blood, a simplified protocol was adopted in which only the center inlet 12' was used while the side inlets 12' and 14' were plugged. As the deuterium oxide was mixed directly with the sample there was no need to provide further deuterium oxide in the separation channel 10'.

Thus, after adding the deuterium oxide and mixing it thoroughly with the whole blood, the liquid sample was pumped into the separation channel 10' through the center inlet 12'. During passage through the separation channel 10' with the acoustic standing wave, the erythrocytes, having a higher density than the mixture of plasma and deuterium oxide moved to the pressure node at the center of the separation channel 10', whereas the leukocytes, which now had a density that was lower than the density of the mixture of plasma and deuterium oxide moved to the antinode along the walls of the separation channel 10. In this way the erythrocytes were separated from the leukocytes and exited the separation channel 10' through the center outlet 18', whereas the leukocytes exited the separation channel 10' through the side outlets 20' and 22'.

In experiment 2, the same volume of blood was mixed with 40 mL 50% glucose solution (density 1.17 kg/L) to obtain the same 1.085 kg/L density of the plasma. The subsequent acoustofluidic operation also separated the erythrocytes from the leukocytes, however, the separated erythrocytes were now obtained in a solution containing significant concentrations of glucose molecules which could interfere with later analyses. The use of the 20g glucose (40 mL of 50% glucose solution) in the 60 mL (plasma) + 20 mL (water from the 40 mL of 50% glucose solution) mixture corresponds to a glucose concentration of 25 wt%, corresponding to about 250 g/L. This concentration is about 250 times higher, or even more, than the normal glucose concentration in blood of about 70-100 mg/dL or 0.7-1 g/L. Accordingly, later analyses performed on the blood cells could for example be skewed by a non-natural high extent of glycosylation of the red blood cells.

Experiment 1 and 2 therefore showed that the use of a second liquid having a different acoustic impedance relative to the first liquid and a different isotopic ratio of at least one chemical element of the molecules making up the first liquid decreases the risk of interference in later analyses of a liquid sample processed in an acoustofluidic operation.

Fig. 3 shows a flowsheet of the method of performing an acoustofluidic operation comprising the steps of providing a liquid sample comprising a first liquid (reference sign i), contacting the liquid sample with second liquid which: a. has a different acoustic impedance relative to the first liquid, and b. has a different isotopic ratio of at least one chemical element of the molecules making up the first liquid (reference sign ii), positioning the liquid sample and second liquid in a cavity (reference sign iii), and performing an acoustofluidic operation by providing at least a part of a, preferably standing, acoustic wave in the cavity (reference sign iv).

Feasible modifications of the technology proposed herein

The technology proposed herein is not limited to the embodiments described above and shown in the drawings, which primarily have an illustrative and exemplifying purpose. This patent specification is intended to cover all adjustments and variants of the preferred embodiments described herein, thus the present invention is defined by the wording of the appended claims and the equivalents thereof. Thus, the equipment may be modified in all kinds of ways within the scope of the appended claims.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

Claims

1. A method of performing an acoustofluidic operation, comprising the steps of:

   i. providing a liquid sample comprising a first liquid,
   ii. contacting the liquid sample with a second liquid which:

   a. has a different acoustic impedance relative to the first liquid, and
   b. has a different isotopic ratio of at least one chemical element of the molecules making up the first liquid,

   iii. positioning the liquid sample and second liquid in a cavity, and
   iv. performing an acoustofluidic operation by providing at least a part of a, preferably standing, acoustic wave in the cavity.

2. The method according to any preceding claim, wherein the second liquid is configured to have a density and/or acoustic impedance that is higher than the first liquid, preferably wherein the second liquid is configured to have a density and/or acoustic impedance at least 0.1%, preferably at least 1%, more preferably at least 5% higher than the first liquid.

3. The method according to any preceding claim, wherein:

   - the second liquid comprises or consists of a liquid compound and the at least one chemical element having the different isotopic ratio is a chemical element of the liquid compound, or
   - the second liquid comprises or consists of a liquid compound in which a further compound is dissolved, and the at least one chemical element having the different isotopic ratio is a chemical element of the further compound.

4. The method according to any preceding claim, wherein:

   - the second liquid comprises or consists of:

   - - one or more of heavy water ($D_2O$), semi-heavy water (HDO), heavy-oxygen water ($H_2^{17}O$ or $H_2^{18}O$), and tritiated water ($T_2O$), or
   - - a mixture of one or more of heavy water ($D_2O$), semi-heavy water (HDO), heavy-oxygen water ($H_2^{17}O$ or $H_2^{18}O$), and tritiated water ($T_2O$), with water ($H_2O$),

   and wherein preferably:

   - the first liquid is water ($H_2O$), and
   - the second liquid comprises or consists of:

   - - one or both of heavy water ($D_2O$) and semi-heavy water (HDO), or,
   - - a mixture of one or both of heavy water ($D_2O$) and semi-heavy water (HDO) with water ($H_2O$),

   and wherein more than 0.015625%, preferably more than 0.02%, more preferably at least 0.03%, most preferably at least 0.1% of the hydrogen atoms in the second liquid are deuterium (D or $^2H$).

5. The method according to any of the preceding claims, wherein the liquid sample comprises particles dispersed in the first liquid, the particles comprising at least a first type of particle.

6. The method according to claim 5, wherein the acoustofluidic operation comprises separating the first type of particles from the first liquid.

7. The method according to claim 5 or 6, wherein the liquid sample further comprises a second type of particle, and wherein the acoustofluidic operation comprises separating the first type of particle from the second type of particle.

8. The method according to claim 7, wherein the second liquid has an acoustic impedance configured so that:

   - the first type of particle and the second type of particle have different absolute value of acoustic contrast in the second liquid,
- the first type of particle and the second type of particle have different sign acoustic contrast in the second liquid,
- one of the first type of particles and the second type of particles has a higher absolute value of acoustic contrast in the second liquid compared to in the first liquid, and/or
- one of the first type of particles and the second type of particles has a different sign acoustic contrast in the second liquid compared to in the first liquid.

9. The method according to any of the claims 1-8, wherein step (ii) of contacting the liquid sample with the second liquid, and step (iii) of positioning the liquid sample and the second liquid in the cavity, comprises mixing the liquid sample with the second liquid prior to the mixture of the liquid sample and the second liquid being positioned in the microfluidic cavity.

10. The method according to any of the claims 1-8, wherein step (ii) of contacting the liquid sample with the second liquid, and step (iii) of positioning the liquid sample and the second liquid in the cavity, comprises introducing the liquid sample and the second liquid into the cavity through separate inlets comprised by the cavity.

11. The method according to claim 10, wherein the separate inlets comprise at least a center inlet and at least a side inlet, wherein the cavity comprises a channel extending from the separate inlets to at least one outlet, and step (iii) of introducing the liquid sample and the second liquid is performed such that the liquid sample and the second liquid flow laminarly, side-by side or one inside the other, through the channel.

12. An acoustofluidic system comprising:

   a) an acoustofluidic device comprising a substrate in which a cavity is provided, the cavity comprising:

      - at least one inlet, and
      - at least one outlet,

   b) an ultrasound transducer connected to the substrate,
   c) a drive circuit connected to the ultrasound transducer and configured to drive the ultrasound transducer at a frequency generating at least a part of a, preferably standing, acoustic wave in the cavity,
   d) a sample container for holding a liquid sample comprising a first liquid,
   e) a sample pump arranged to pump the liquid sample from the sample container and introduce it into the cavity,
   f) a container holding a second liquid which:

      a. has a different acoustic impedance relative to the first liquid, and
      b. has a different isotopic ratio of at least one chemical element of the molecules making up the first liquid.

13. The acoustofluidic system according to claim 12, wherein:

   - the cavity is a channel having the at least one inlet and the at least one outlet,
   - wherein the at least one inlet comprises a separate center inlet and a separate side inlet, and wherein the system further comprises:
   g) a pump arranged to pump the second liquid from the container and introduce it into the cavity,
   and wherein:
   - the sample pump is arranged to pump the liquid sample from the sample container to the side inlet and the pump is arranged to pump the second liquid from the container to the center inlet, or
   - the sample pump is arranged to pump the liquid sample from the sample container to the center inlet and the pump is arranged to pump the second liquid from the container to the side inlet.

14. Use of a second liquid which:

   a. has a different acoustic impedance relative to a first liquid, and
   b. has a different isotopic ratio of at least one chemical element of the molecules making up the first liquid,

   for performing an acoustofluidic operation on a liquid sample comprising the first liquid.

15. A second liquid for use in an acoustofluidic operation performed on a liquid sample comprising a first liquid, the second liquid comprising:

- one or more of heavy water ($D_2O$) and semi-heavy water (HDO), more preferably heavy water ($D_2O$) or a mixture of heavy water ($D_2O$) and water ($H_2O$), wherein more than 0.02% preferably more than 0.03%, more preferably at least 0.1% of the hydrogen atoms in the second liquid are deuterium (D or $^2H$), and
- a buffer system such as a phosphate or carbonate buffer system,

the second liquid preferably further comprising one or more of:

- sodium ions, and
- a surfactant.

12 14 30 32 34 36    10         20 18

40

16

FIG. 1A

12 14 30 32 34 36 50  10        20 18

40

16

FIG. 1B

12 14 30 32 34 36 50   10        20 18

40

16

FIG. 1C

12 14 30 32 34 36 50   10        20 18

40

16

FIG. 1D

1

2    44    4    42  12' 14'  6    50        10'              18' 20' 46 48

22'

62

72

74    16'

64

102    104

82              92

60

100

80              90

36

32    30

34

70

40

32              34

40              36

FIG. 2

i    Providing liquid sample

ii   Contacting liquid sample

iii  Positioning liquid sample

iv   Performing acoustofludic operation

FIG. 3

**EUROPEAN SEARCH REPORT**

Application Number

EP 24 15 8215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/066553 A1 (BECTON DICKINSON CO [US]) 1 May 2014 (2014-05-01) | 12,13 | INV. B01L3/00 |
| A | * paragraphs [0041] - [0043]; figures 8,9 * <br> * paragraphs [0122], [0144], [0145] * | 1-11 | G01N15/14 |
| X | OHLSSON PELLE ET AL: "Acoustic impedance matched buffers enable separation of bacteria from blood cells at high cell concentrations", SCIENTIFIC REPORTS, vol. 8, no. 1, 14 June 2018 (2018-06-14), XP093193915, US ISSN: 2045-2322, DOI: 10.1038/s41598-018-25551-0 Retrieved from the Internet: URL:https://www.nature.com/articles/s41598-018-25551-0.pdf> [retrieved on 2024-08-08] | 12,13 | |
| A | * the whole document * | 1-11 | TECHNICAL FIELDS SEARCHED (IPC) |
| X | GHULAM DESTGEER ET AL: "Microparticles self-assembly induced by travelling surface acoustic waves", ARXIV.ORG, CORNELL UNIVERSITY LIBRARY, 201 OLIN LIBRARY CORNELL UNIVERSITY ITHACA, NY 14853, 13 November 2018 (2018-11-13), XP081049856, * the whole document * | 15 | B01L G01N |

The present search report has been drawn up for all claims

| Place of search | Date of completion of the search | Examiner |
|---|---|---|
| The Hague | 9 August 2024 | Vlassis, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8215

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | Publication date | Patent family member(s) | Publication date |
|---|---|---|---|
| WO 2014066553 A1 | 01-05-2014 | CN  104736718 A | 24-06-2015 |
| | | CN  110595987 A | 20-12-2019 |
| | | EP  2912189 A1 | 02-09-2015 |
| | | US  2014120570 A1 | 01-05-2014 |
| | | US  2015160116 A1 | 11-06-2015 |
| | | US  2016252445 A1 | 01-09-2016 |
| | | WO  2014066553 A1 | 01-05-2014 |

EPO FORM P0459

For more details about this annex : see Official Journal of the European Patent Office, No. 12/82